(19) Europäisches Patentamt

European Patent Office

Office européen des brevets

(11) Publication number: **0 360 101 B1**

# EUROPEAN PATENT SPECIFICATION

(12)

(45) Date of publication of patent specification: **08.12.93**   (51) Int. Cl.⁵: **B60H  1/00**, G05D 23/24

(21) Application number: **89116684.5**

(22) Date of filing: **08.09.89**

(54) **Regulating heater discharge air temperature for front and rear passenger in a vehicle.**

(30) Priority: **23.09.88 US 248864**

(43) Date of publication of application:
**28.03.90 Bulletin  90/13**

(45) Publication of the grant of the patent:
**08.12.93 Bulletin  93/49**

(84) Designated Contracting States:
**DE FR GB**

(56) References cited:
EP-A- 0 179 625       EP-A- 0 214 605
DE-A- 3 339 803       US-A- 4 570 450
US-A- 4 665 971       US-A- 4 711 295

(73) Proprietor: **EATON CORPORATION**
**Eaton Center**
**Cleveland, Ohio 44114(US)**

(72) Inventor: **Kenny, Andrew Augustine**
**451 S. Park**
**Roselle Illinois 60172(US)**
Inventor: **Glennon, Thomas Francis**
**806 Timber Lane**
**Darien Illinois 60559(US)**
Inventor: **Franz, Rudolph Joseph**
**308 E. Weathersfield Way**
**Schaumburg Illinois 60193(US)**
Inventor: **DeVera, Dennis**
**907 Cumberland Court**
**Carol Stream Illinois 60288(US)**

(74) Representative: **Wagner, Karl H.**
**WAGNER & GEYER**
**Patentanwälte**
**Gewürzmühlstrasse 5**
**D-80538 München (DE)**

EP 0 360 101 B1

**Description**

BACKGROUND OF THE INVENTION

The present invention relates to passenger comfort or climate control systems employed in the passenger compartment of automotive vehicles and particularly those having large passenger compartments and typically vehicles having body styles of the van or station wagon type.

Heretofore, the heating and air conditioning systems for vans and station wagons have in the majority of commercially produced vehicles, provided for forced air discharge emanating from the dashboard region of the vehicle passenger compartment. Dashboard location of the air discharge outlet in vans and station wagons has resulted in uneven temperature distribution within the passenger compartment causing the system to be set for extreme of temperature control in order to provide adequate heating or cooling for the passengers in the rear section of the passenger compartment. This has often resulted in uncomfortably extreme heating or cooling of the passengers in the forward section of the passenger compartment.

In order to provide increased heating or cooling capacity of the climate control system for the rear passengers, some vehicles have been equipped with auxiliary heat exchangers, in addition to the forward or dash mounted units, with the auxiliary heat exchangers mounted separately in the wall of the vehicle in the rear section of the passenger compartment. Typical installations of this sort have employed a separate heat exchanger in the rear section for circulating engine coolant as a heating medium and an evaporator heat exchanger for circulation of refrigerant for providing cooling to the rear section of passenger compartment. An apparatus of this type is disclosed in US-A-4,570,450, with claims therein directed to air conditioning only via evaporators and a refrigerant supply. A separate blower has been provided adjacent the rear mounted heat exchangers with a simple blower speed control accessible by the rear passengers. However, passengers seated directly adjacent the blower discharge for the rear heating and cooling heat exchangers have been subject to discomfort when the blower speed was increased to provide greater heating or cooling output responsive to ambient conditions necessitating greater cooling or heating for the comfort of the rear passengers. Manually controlling blower speed to manage rear van temperature requires constant attention from the operator as discharge air temperature varies with vehicle speed, acceleration, ambient temperature and sum load, affecting passenger comfort and satisfaction.

Accordingly, it has long been desired to find a way or means of providing uniform temperature distribution in a vehicle passenger compartment for the comfort of both front and rear passengers; and, it has also been desired to do so in a manner which allowed for individual selection of the temperature in the forward and rear passenger compartment sections. It has further been desired to find a way to provide for automatic temperature regulation despite blower speed changes selected by the passengers.

SUMMARY OF THE INVENTION

The present invention provides a control system for regulating the temperature of forced air discharged from a vehicle passenger compartment climate control system. The present invention provides for front passenger control of the relative air temperature of forced air directed over heat exchangers disposed for heating and cooling the front section of the passenger compartment. The invention provides for separate rear passenger selection of the desired relative level of temperature and provides for automatic regulation of the discharge air temperature over separate heat exchangers disposed in the rear section of the passenger compartment. A butterfly type water valve is provided at the inlets of each of the individual front and rear exothermic heat exchangers or heater cores; and, the position of the valve is modulated in response to a control signal for controlling flow of the engine coolant or heating fluid to the exothermic heat exchanger.

A thermistor is disposed adjacent both the front and rear heat exchangers to sense the temperature of the forced air discharged over the heat exchangers and into the passenger compartment. Individual temperature selection controllers are provided in the forward and in the rear section of the passenger compartment for selection of the desired relative temperature level respectively by the passengers in that section. An electronic controller sums an electrical reference signal, representing the relative temperature selected in the particular section, with the temperature sensed by the thermistor in that section of the compartment and an electrical valve position feedback signal. The controller generates a control signal proportional to the sum and a motorized valve servo-actuator is responsive to the control signal to move the valve until the sum is nulled to thereby control the flow of engine coolant to the heater core and regulate the discharge air temperature to the passenger compartment about the selected relative level.

In the simplest form of the invention, only a heating mode or exothermic heat exchanger is employed in the front and rear; and, the respective thermistors sense the temperature of the heated air directed over the heating mode heat exchangers in the front and rear of the passenger compartment. In the preferred practice of the invention, a refrigerant evaporator or endothermic cooling heat exchanger is disposed in the forced air stream upstream of the heater core or exothermic heat exchanger or between the heater core and the blower. In this preferred arrangement, a module assembly is provided with the evaporators and heater cores in tandem in the forced air stream in the plenum housing; and the sensed temperature is the result of the combined effects of cooling and heating of the forced air. The present invention thus provides separate climate control units for front and rear passengers and enables passengers in the rear section of the van passenger compartment to select a desired temperature level for automatic regulation of the air discharging to the rear section of the passenger compartment independently from such a selection by the front passengers.

The control system of the present invention provides a novel technique for passenger compartment temperature regulation and functions to automatically modulate the position of a valve controlling flow of coolant to a heater core disposed in that section of the compartment for regulating discharge air about the user selected relative level. The control system of the present invention provides for automatic continuous regulation of the blower discharge temperature about a level selected by the passengers in a section of the compartment irrespective of the blower speed selected. The present invention thus provides for automatic modulation of hot water valves separately supplying front and rear passenger heaters and thereby provides separate automatic regulation of the relative temperature of the blower air discharged over each heater. The automatic regulation accommodates passenger selected blower speed changes and the addition of air conditioning heat exchangers upstream in the blower air stream.

BRIEF DESCRIPTION OF THE DRAWINGS

Figure 1 is a pictorial, somewhat schematic representation of the control system showing the arrangement of the heat exchangers, controllers and valve actuators; and,
Figure 2 is an electrical schematic of the circuitry employed in the system of Figure 1, and

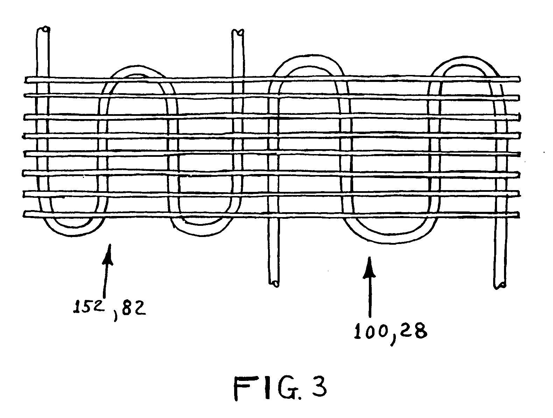

Figure 3 provides a detail view of pairs of heat exchangers as shown in Figure 1, depicting common fins

DETAILED DESCRIPTION

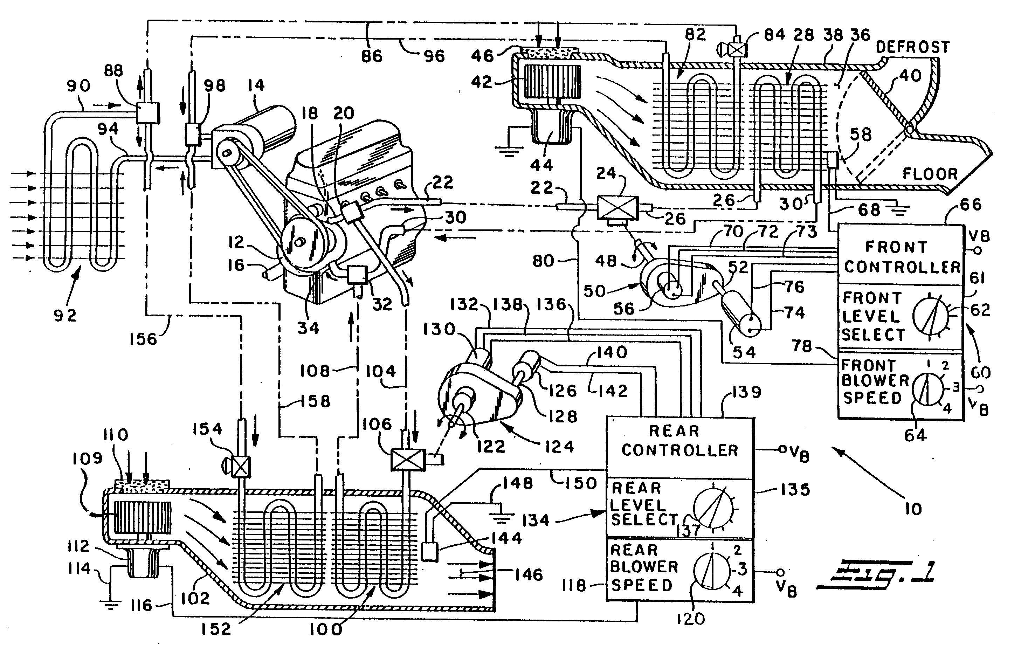

Referring to Figure 1, the control system of the present invention is indicated generally by the reference numeral 10 and is shown as installed in a typical passenger automotive van having an engine driven water pump 12 for circulating engine coolant and also an engine driven refrigerant compressor 14 for circulating refrigerant. The water pump 12 has a primary inlet 16 for receiving therein coolant from the radiator (not shown); and, the pump has its primary outlet communicating with the coolant passages for circulation of coolant through the engine and which are not shown in Figure 1. Water pump 12 has an auxiliary outlet 18 which is connected to a junction block 20 for providing a source of engine coolant through conduit 22 to the inlet of a control valve 24, preferably of the butterfly type, which has its outlet connected through conduit 26 to the inlet of a front heater core or heat exchanger indicated generally at 28. The heater core 28 circulates coolant through conduit 30 to a junction block 32 which is connected to an auxiliary return 34 of the water pump 12. In the presently preferred practice, valve 24 is a by-pass type butterfly valve giving substantially full flow with 30° rotation of the butterfly from the closed position.

Heater core 28 is disposed in a plenum chamber 36 formed within a housing or duct 38 disposed in the dashboard region or forward section of the van passenger compartment. The housing 38 has an upper or "DEFROST" outlet and a lower or "FLOOR" outlet with a pivotally disposed vane or mode select door 40 which provides for selection of the outlet to be supplied. Vane 40 may be moved by any suitable type of actuator (not shown) either manually controlled or automatic.

Housing 38 also has disposed therein a suitable blower 42 driven by motor 44 mounted externally to the housing and with the shaft thereof extending through the housing wall. Blower 42 is supplied with air through a suitable filtered inlet 46 which may be selectably connected (by means not shown) for either recirculation of passenger compartment air or for intake of ambient air from the vehicle exterior as is well known in the art. Upon energization of motor 44, blower 42 provides a flow of air over the heat exchanger 28 for discharge through either the FLOOR or DEFROST outlets as desired.

The butterfly control valve 24 is connected via shaft 48 to a rotary servo-actuator, indicated generally by numeral 50, which has a shaft 48 as its output and an input shaft 52 thereof connected to a suitable reversible 12 volt DC motor 54. Actuator 50 has provided thereon a position sensor for output shaft 48 in the form of potentiometer 56 which is operative as will be hereinafter described, to provide an electrical signal indicative of the rotary position of shaft 48. Actuator 50 is operative upon the energization of motor 54 to rotate rate shaft 48 in either a clockwise or counter clockwise sense for moving a butterfly vane member (not shown) within valve 24 for modulating coolant flow to the heat exchanger 28. In the presently preferred practice, servo-actuator 50 includes a speed reducer providing a reduced rate of rotation at output shaft 48. A ratio of 30:1 has been found satisfactory from input to output of the servo-actuator 50, but other ratios may be employed as desired to provide differing rates of response.

Although a D.C. motorized servo-actuator with a feedback potentiometer is disclosed, it will be understood that the potentiometer can be eliminated if desired. Also, a stepper motor may be employed, in which case the speed reducer will not require the high ratio of input to output; and, if stepper motor torque is sufficient, speed reduction may not be required.

A discharge air temperature sensor in the form of thermistor 58 is disposed within the plenum 36 closely adjacent the downstream or discharge edge of the heater core 28 for sensing the temperature of the air in the plenum chamber.

A front control module indicated generally by reference numeral 60 is disposed within the front section of the van passenger compartment in a suitable manner as to be readily accessible to the front passengers and preferably dashboard mounted. The module 60 includes a front temperature LEVEL SELECT control 61 having a rotatable knob 62, an electronic controller 66 and may include a front blower speed control 78 having a selector knob 64. The controller 66 receives power from the vehicle power supply $V_B$ and is connected to receive an input from thermistor 58 along lead 68 and is also connected to the receive an input from the feedback potentiometer 56 along leads 70, 72. Drive motor 54 is connected to controller 66 via leads 74, 76; and, the blower motor 44 is connected on one side to blower speed control 78 by lead 80 with the opposite lead of the motor grounded to the common ground for the supply $V_B$.

If the vehicle is equipped with passenger compartment air conditioning, a second endothermic heat exchanger comprising a refrigerant evaporator, indicated generally by numeral 82, is disposed in the housing 38 upstream of the heater core 28 or between the heater core 28 and the blower 42. Evaporator 82 is supplied by a thermal expansion valve 84 which has its inlet connected via conduit 86 to the outlet of a junction block 88 which is supplied at its inlet via conduit 90 from the refrigerant liquefication heat exchanger or condenser indicated generally by numeral 92. Condenser 82 is supplied via conduit 94 which is connected to the high pressure discharge outlet part of compressor 14. If desired, the fluid circulation tubes of evaporator 82 and heater core 28 may be mounted in tandem in the blower stream in a common integral set of fins for heat exchange with the blower air.

In the system illustrated in Figure 1, the flow of refrigerant to the evaporator 82 is controlled by the thermal expansion valve in a manner well known in the art to maintain optimum vaporization of the liquid coolant such that a slight amount of superheat is provided at the outlet of the evaporator and that no liquid is returned through conduit 96 via junction block 98 to the low pressure suction port of compressor 14. With the evaporator 82 in place in the blower stream ahead of the heater core 28, the thermistor 58 is operative to sense the combined cooling and heating effect of the two heat exchangers. The temperature of the forced air flow in plenum chamber 36 is controlled in this arrangement by modulating the position of the water valve 24 and controlling the flow of coolant through the evaporator 28. Thus, it will be seen that the simplest form of the system, which employs only heater core 28 retains the ability to control and regulate the plenum discharge temperature upon the addition of air conditioning evaporator 82 into the system. Thus, the control system may be employed either with or without air conditioning in the vehicle.

With continued reference to Figure 1, a second heat exchanger or heater core indicated generally by reference numeral 100 is disposed in a second housing or duct 102 which is located in the rear section of the van passenger compartment. The heater core 100 receives heated engine coolant via conduit 104 through control valve 106 and returns flow to the water pump via conduit 108 and junction block 32. Blower 109 is disposed in the remote end of the housing 102 and is supplied air through filter 110 and is driven by a shaft extending through the housing 102 and connected to an externally mounted motor 112. The motor is preferably a 12 volt direct current motor with one side grounded via lead 114 and the other side connected via lead 116 to a blower speed control 118 having a selector knob 120 positionable by the rear passengers for selection of the desired blower speed.

The control valve 106 is preferably of the butterfly type similar to valve 24; and, the valve 106 is positioned by rotation of shaft 122 connected to the output of a servo-actuator indicated generally by the reference numeral 124, and driven by motor 126 connected to the input thereof via shaft 128. The servo-actuator 124 has an output shaft position sensor 130 in the form of a feedback potentiometer similar to potentiometer 56 and connected to a rear control module 134 via leads 132, 136 and 138. Control module 134 includes electronic controller 139, rear temperature level selector 135 and may include blower speed control 118. Motor 126 is connected to the rear electronic controller 139 via leads 140, 142.

A temperature sensor in the form of thermistor 144 is disposed within the housing 102 downstream of the heater core 100 for sensing the temperature of the forced air flow discharging from plenum chamber 146 which is formed in the housing 102 adjacent the outlet thereof. The thermistor 144 and thermistor 58 preferably comprise negative temperature coefficient (NTC) devices having a resistance of 37 kilo-Ohms at 25°C; and, a suitable device is available from Keystone Carbon Corp., St. Marys, Pennsylvania bearing manufacturer's type number A919. Thermistor 144 has one side thereof grounded along lead 148 with the other side connected to the rear controller 139 via lead 150.

In the preferred practice, an endothermic heat exchanger or refrigerant evaporator, indicated generally by reference numeral 152, is provided for air conditioning and is also disposed within housing 102 and immediately adjacent and upstream of the heater core 100. Evaporator 152 is supplied at its inlet by a thermal expansion valve 154 similar to valve 84 and supplied by conduit 156 connected to receive a flow of refrigerant from junction block 88. Evaporator 152 returns vaporized and superheated refrigerant via conduit 158 to junction block 98 for return to the compressor suction port. It will be seen that the thermistor 144 senses the combined cooling and heating effects of evaporator core 152 and heater core 100 to modulate valve 106 and control coolant flow through the heater core 100 to maintain the temperature in plenum 146 regulated about the selected relative level. In the simplest form, the invention provides automatic blower air discharge temperature regulation for front and rear heater cores 28,100. However, in vehicles equipped with air conditioning, the addition of front and rear evaporators 82,152 is accommodated and the system will continue to provide individual regulation of front and rear blower air discharge temperature about a selected relative level.

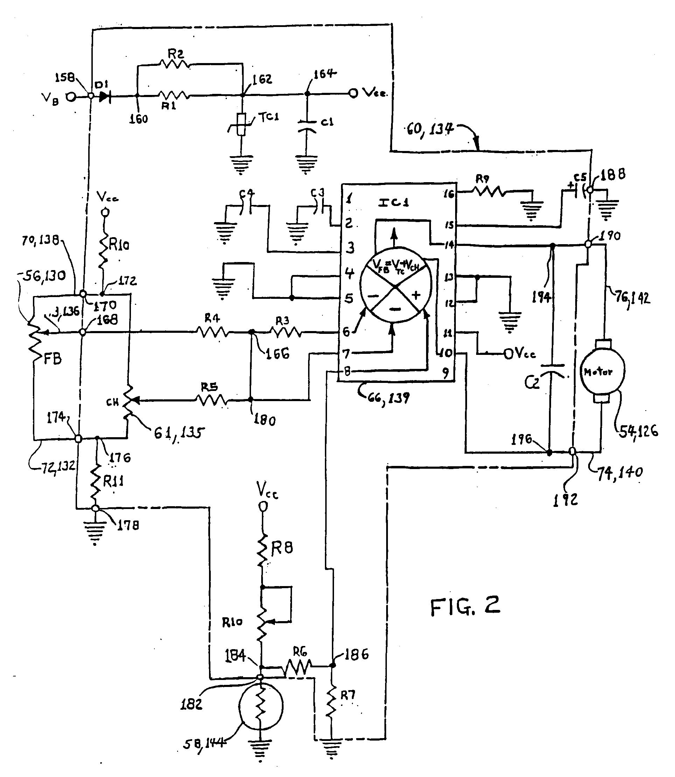

Referring to Figure 2, the electrical circuitry for the invention is illustrated and includes a power supply for the control modules 60, 134 wherein the onboard vehicle power supply $V_B$ is connected through terminal 158 and through Diode D1 to junction 160. A pair of resistors R1 and R2 are connected in parallel to junction 160 and junction 162 which is grounded through Zener device TC1 which is a 22 volt metal oxide varistor functioning as a transient suppressor. Junction 162 is connected by a lead to junction 164 which is grounded through capacitor C1 and which provides the power supply voltage Vcc.

The controllers 139, 66 each comprise a microprocessor designated IC1 in Fig. 2 and, which, in the presently preferred practice of the invention bears manufacturer's designation MC33030 and is available from Motorola Semiconductor Div. Schaumberg, Illinois. The microprocessor IC1 receives at pin 6 thereof a signal through resistor R3 which is connected via junction 166 and through resistor R4 to terminal 168. The feedback potentiometers 56, 130, denoted by the reference character FB in Figure 2, have the movable wiper of the potentiometer FB connected by respectively leads 73, 136 to terminal 168.

The potentiometer FB has one lead 70,138 of the resistor thereof supplied through resistor R10 and junction 172 with the regulated voltage Vcc. The remaining lead 72,132 of the potentiometer resistance 56,130 is connected through the terminal 174, to junction 176 which is grounded through resistor R11 and terminal 178.

The LEVEL SELECT controls respectively 61, 135, each comprise a potentiometer denoted by the reference character CH in Figure 2 with one lead of the resistance 61,135 connected to junction 172 for biasing by the supply voltage Vcc; and, the remaining lead of the resistor is connected to junction 176. The movable wiper of the potentiometer CH is connected via resistor R5 to junction 180 which is connected to input pin 7 of IC1 and also to junction 166. Pins 4 and 5 of IC1 are grounded and pin 2 is connected to ground through capacitor C3; whereas, pin 3 is grounded through capacitor C4.

The temperature sensors 58, 144 each comprise an NTC thermistor having one side grounded and the other side connected through terminal 182 to receive power supply voltage Vcc through resistor R8 and trim resistor R10 via junction 184. The voltage at junction 184 is applied through resistor R6 and junction 186 to input pin 8 of IC1. Junction 186 is also connected through resistor R7 to ground.

Output pin 16 of IC1 is grounded through a resistor R9; and, pin 15 is also grounded through capacitor C5 via terminal 188. Pins 12 and 13 are grounded and pin 11 is connected to receive the supply voltage Vcc. Output pin 14 is connected to terminal 190 and respectively leads 76, 142 which are connected to one side respectively of the servo-actuator motors 54,126; and, the opposite side of the motors are connected respectively to leads 74, 140 and to terminal 192 which is connected to output pin 10 of IC1. Capacitor C2 is connected across the motor leads at junctions 194, 196. The values of resistances and capacitances are set forth in Table I below:

TABLE I

| Resistances | | Capacitances | | Other Devices | |
|---|---|---|---|---|---|
| R | Ohms | C | Microfarads | | |
| 1,2 | 27-1/2W | 1 | 0.33 | TC1 | 22V |
| 3 | 56K | 2 | 0.1 | IC1 | MC33030 |
| 4,5 | 33K | 3 | 0.1 | 58,144 | 37K-NTC |
| 6 | 27K | 4 | 0.1 | | |
| 7 | 91K | 5 | 1 | | |
| 8 | 4K | | | | |
| 9 | 68K | | | | |
| 10,11 | 2.5K | | | | |
| FB,CH | 5K | | | | |

In operation, each controller 139,66 acts as a summing amplifier summing the signal from the potentiometer FB and potentiometer CH as negative inputs and the voltage from the thermistor 58, 144 as a positive input in accordance with the expression

$$V_{FB} = V_{58,144} + V_{CH,}$$

where $V_{FB}$ is the voltage on the wiper of the output feedback potentiometer 73,136 and $V_{CH}$ is the voltage on the wiper of relative temperature level selector 61,135. The control signal is provided to each motor 126,54 until the summation is zero, whereupon rotation of motor 54,126 ceases.

It will be understood that the user, either a front or rear passenger as the case may be, selects a blower speed with controller 78,118 based upon the ambient conditions and then adjusts the appropriate relative temperature, LEVEL SELECT control knob 137,62 for a perceived relative adjustment of the temperature level. The controller 66,139 then automatically modulates the coolant valve 106,24 to achieve the desired relative change in blower discharge temperature. Likewise, if the blower speed is changed, the system will modulate coolant flow accordingly to maintain the blower air discharge temperature constant.

It will be seen that the present invention provides a novel means for providing individual relative temperature level selection for the front and rear sections of a van passenger compartment. The system provides for automatic modulation of the heater water valve individually for the separate front and rear heater cores for separately regulating the blower plenum air discharge temperature. The present invention thus provides substantially constant blower air discharge temperature. For a given blower speed, the present invention provides for automatic coolant flow adjustment in response to a user selected relative temperature change. If the user then selects a different blower speed, the system automatically modulates water valve to maintain constant the selected relative blower air discharge temperature. The invention thus gives automatic temperature regulation and individual temperature control for front and rear passengers in vehicles having large passenger compartments such as vans and station wagons. Although the invention has hereinabove been described with respect to the illustrated embodiments, it will be understood that modifications and variations may be made to the invention which is limited only as a scope of the following claims.

**Claims**

1.  A system for controlling the temperature of air discharged into a vehicle passenger compartment, comprising:

    a heat exchanger (28) with heated-fluid flow therethrough, disposed in a chamber (36) within a housing (38);
    a blower (42) within housing (38), driven by a motor (44) to provide air flow over heat exchanger (28);
    discharge outlets (FLOOR; DEFROST) in housing (38) to discharge the air flow from the heat exchanger (28) into said passenger compartment through a mode-select door (40);
    a sensor (58) for sensing the temperature of the air discharge from the heat exchanger (28) into the passenger compartment, said sensor providing an electrical signal indicative of the sensed temperature;
    characterised in that the system also comprises:
    a valve (24) with a movable member for controlling the flow of said fluid to said heat exchanger (28), said movable member being moved by a servo-actuator (50) whose position is indicated by an electrical signal

a selector (61) of user-desired relative change in said discharge air temperature within the passenger compartment, said selector providing an electrical reference signal indicative of the user-desired relative change in temperature;

summing means (66) for summing said sensor electrical signal, said valve position electrical signal and said selector electrical reference signal; and

servo-actuator means (50) connected to said summing means (66) for actuating movement of said movable member of said valve until said sum of electrical signals is Zero for regulation of the temperature of said discharged air from said heat exchanger.

2. The system defined in claim 1, wherein a separate heat exchanger, a separate blower, separate discharge outlets, a separate sensor, a separate valve, a separate selector, a separate summing means and a separate servo-actuator means is provided in the front and in the rear of a vehicle passenger compartment for separate control by front and rear passengers of temperature of the air discharged into said front and into said rear of said vehicle passenger compartment.

3. The system defined in claim 1 or claim 2, wherein each of said separate blowers (42, 109) is electrically associated with a respective blower speed control means (78, 118).

4. The system defined in claim 1 or claim 2, wherein each of said separate sensors (58, 144) is a thermistor-type temperature sensor having a negative temperature coefficient of resistance.

5. The system defined in claim 1 or claim 2, wherein each of said separate valves (24, 106) is a continuous flow by-pass type valve.

6. The system defined in claim 5, wherein each of said separate valves (24, 106) is a by-pass type butterfly valve giving substantially full air flow with 30° rotation of said butterfly movable member from its closed position.

7. The system defined in claim 1 or claim 2, wherein each of said separate selectors (61, 135)of passenger-desired relative temperature is a potentiometer (56, 130).

8. The system defined in claim 1, further comprising a heat exchanger (82) with refrigerant flow therethrough, disposed in said chamber (36) within said housing (38) adjacent and upstream of said first heat exchanger (28).

9. The system defined in claim 1 or claim 2, further comprising a separate heat exchanger with refrigerant flow therethrough provided in the front (82) and in the rear (152) of a vehicle passenger compartment adjacent and upstream of each of said heat exchangers (28, 100) for separate control by front and rear passengers of temperature of the air discharged into the front and into the rear of said vehicle passenger compartment.

10. The system defined in claim 9, wherein one of each of said heat exchangers (28, 100) and one of each of said heat exchangers (82, 152) are formed with common fins in the front and in the rear of said vehicle passenger compartment.

11. The system defined in claim 9, further comprising a separate expansion valve (84, 154) connected to each of said heat exchangers (82, 152) for control of refrigerant flow by each of said heat exchangers (28, 100).

12. The system defined in claim 1, werhein said valve (24, 106) and said servo-actuator means (50, 124) are mounted on said housing (38, 102).

13. A method of controlling the temperature of air discharged into a vehicle passenger compartment comprising the steps of:

(a) providing a heat exchanger (28) and flowing heated fluid therethrough;

(b) blowing a stream of air over said heat exchanger and directing the discharge therefrom into the vehicle passenger compartment;

(c) sensing the temperature of the air discharge from the heat exchanger into the passenger compartment and providing an electrical temperature signal indicative of the sensed temperature; characterised in that the method also comprises the steps of:

(d) providing a valve (24) having a movable member for controlling the flow of heated fluid through said heat exchanger (28) and providing an electrical indication of the position of said valve member;

(e) providing an electrical reference signal indicative of a user-desired relative change in said discharge air temperature; and,

(f) summing only said electrical reference signal, said temperature signal and said electrical indication of said valve position and moving said valve member until said sum is zero for regulating the temperature of said discharge air from said heat exchanger.

14. The method defined in claim 13, wherein the step of providing a heat exchanger, includes the step of providing separate heat exchangers in the front (28) and rear (100) of the passenger compartment; and the step of providing a valve (24) includes the step of providing a separate valve (24,106) for each heat exchanger.

15. The method defined in claim 13, further comprising the steps of:

(a) providing a cool air heat exchanger (82) disposed upstream of said warm air heat exchanger; and

(b) circulating a flow of refrigerant in said cool air heat exchanger for cooling said stream of air before flow over said warm air heat exchanger (28).

16. The method defined in claim 13, wherein said step of blowing a stream of air over said heat exchanger includes the steps of providing a blower and selectively varying the speed of said blower.

17. The method defined in claim 13, wherein the step of providing an electrical reference signal indicative of a user-desired relative change in said discharge air temperature includes the step of providing a separate electrical reference signal in the front and in the rear of a vehicle passenger compartment.

**Patentansprüche**

1. Ein System zum Steuern der Temperatur von Luft, die in ein Fahrzeugpassagierabteil oder -raum abgegeben wird, wobei das System folgendes aufweist:

einen Wärmetauscher (28) mit einer Strömung eines erwärmten Mittels dort hindurch, der in einer Kammer (36) innerhalb eines Gehäuses (38) angeordnet ist;

ein Gebläse (42) innerhalb des Gehäuses (38), angetrieben durch einen Motor (44), um eine Luftströmung über den Wärmetauscher (28) vorzusehen;

Abgabeauslässe (Boden; Enteisen) im Gehäuse (38) zum Abgeben der Luftströmung vom Wärmetauscher (28) in den Passagierraum, und zwar durch eine Betriebsart oder Modusauswahltür (40);

einen Sensor (58) zum Abfühlen der Temperatur der Luftabgabe vom Wärmetauscher (28) in den Passagierraum, wobei der Sensor ein elektrisches Signal vorsieht, das die abgefühlte Temperatur anzeigt;

dadurch **gekennzeichnet,** daß das System weiterhin folgendes aufweist:

ein Ventil (24) mit einem bewegbaren Glied zum Steuern der Strömung des Strömungsmittels zu dem Wärmetauscher (28), wobei das bewegbare Glied bewegt wird durch einen Servobetätiger (50), dessen Position durch ein elektrisches Signal angezeigt ist;

Auswahlmittel (61) für eine vom Bediener gewünschte relative Änderung in der Abgabelufttemperatur innerhalb des Passagierraums, wobei die Auswahlmittel ein elektrisches Bezugssignal vorsehen, das die vom Bediener gewünschte relative Temperaturänderung anzeigt:

Summiermittel (66) zum Summieren des elektrischen Signals des Sensors, des elektrischen Ventilpositionssignals und des elektrischen Auswahlmittelbezugssignals; und

Servobetätigermittel (50), verbunden mit den Summiermitteln (66) zur Betätigungsbewegung des bewegbaren Gliedes des Ventils, bis die Summe der elektrischen Signale Null ist für die Regulierung der Temperatur der Abgabeluft von dem Wärmetauscher.

2. System nach Anspruch 1, wobei folgendes vorgesehen ist: ein separater Wärmetauscher, ein separates Gebläse, separate Abgabeauslässe, ein separater Sensor, ein separates Ventil, separate Auswahlmittel, separate Summiermittel und separate Servobetätigermittel, und zwar im vorderen und hinteren Teil eines Fahrzeugpassagierraums zur separaten Temperatursteuerung der abgegebenen Luft in den vorderen und in den hinteren Teil des Fahrzeugpassagierraums, und zwar durch die vorderen und hinteren Passagiere.

3. System nach Anspruch 1 oder 2, wobei jeder der separaten Gebläse (42, 109) elektrisch assoziiert ist mit entsprechenden Gebläsegeschwindigkeitssteuermitteln (78, 118).

4. System nach Anspruch 1 oder 2, wobei jeder der separaten Sensoren (58, 144) ein Temperatursensor der Thermistorbauart ist, und zwar mit einem negativen Temperaturwiderstandskoeffizienten.

5. System nach Anspruch 1 oder 2, wobei jedes der separaten Ventile (24, 106) ein Ventil der kontinuierlichen Strömungsbypaßbauart ist.

6. System nach Anspruch 5, wobei jedes der separaten Ventile (24, 106) ein Drossel- oder Drehklappenventil der Bypaßbauart ist, das eine im wesentlichen volle Luftströmung mit einer 30°-Drehung des bewegbaren Drehklappengliedes aus seiner geschlossenen Position liefert.

7. System nach Anspruch 1 oder 2, wobei jedes der separaten Auswahlmittel (61, 135) der vom Passagier gewünschten Relativtemperatur ein Potentiometer (56, 130) ist.

8. System nach Anspruch 1, das weiterhin einen Wärmetauscher (82) aufweist, mit einem Kühlmittel, das dort hindurch strömt und der in der Kammer (36) innerhalb des Gehäuses (38) angeordnet ist benachbart und stromaufwärts bezüglich zum ersten Wärmetauscher (28).

9. System nach Anspruch 1 oder 2, das weiterhin einen separaten Wärmetauscher aufweist mit einer Kühlmittelströmung dort hindurch, und zwar vorgesehen in dem vorderen Teil (82) und dem hinteren Teil (152) eines Fahrzeugpassagierraums, und zwar benachbart und stromaufwärts zu jedem der Wärmetauscher (28, 100) für eine separate Steuerung der Temperatur der abgegebenen Luft in den vorderen Teil und in den hinteren Teil des Fahrzeugpassagierraums, und zwar durch vordere und hintere Passagiere.

10. System nach Anspruch 9, wobei einer von jedem der Wärmetauscher (28, 100) und einer von jedem der Wärmetauscher (82, 152) mit gemeinsamen Finnen ausgebildet sind, und zwar in dem vorderen und dem hinteren Teil des Fahrzeugpassagierraums.

11. System nach Anspruch 9, das weiterhin ein separates Ausdehnungsventil (84, 154) aufweist, das mit jedem der Wärmetauscher (82, 152) verbunden ist zum Steuern der Kühlmittelströmung durch jeden der Wärmetauscher (28, 100).

12. System nach Anspruch 1, wobei das Ventil (24, 106) und die Servobetätigermittel (50, 124) an dem Gehäuse (38, 102) angebracht sind.

13. Ein Verfahren zum Steuern der Temperatur von Luft, die in ein Fahrzeugpassagierraum abgegeben wird, weist die folgenden Schritte auf:
    (a) Vorsehen eines Wärmtauschers (28) und Hindurchfließenlassen von erwärmten Strömungsmittel dort hindurch;
    (b) Blasen eines Luftstroms über den Wärmetauscher und Leiten von dessen Abgabe in den Fahrzeugpassagierraum;
    (c) Abfühlen der Temperatur der Luftabgabe vom Wärmetauscher in den Passagierraum und Vorsehen eines elektrischen Temperatursignals, das die abgefühlte Temperatur anzeigt;
    dadurch **gekennzeichnet**, daß das Verfahren noch die folgenden Schritte aufweist:
    (d) Vorsehen eines Ventils (24) mit einem bewegbaren Glied zum Steuern der Strömung von erwärmtem Strömungsmittel durch den Wärmetauscher (28) und Vorsehen einer elektrischen Anzeige der Position des Ventilgliedes;
    (e) Vorsehen eines elektrischen Bezugssignals, das die vom Bediener gewünschte relative Veränderung in der Abgabelufttemperatur anzeigt, und

9

(f) Summieren nur des elektrischen Bezugssignals, des Temperatursignals und der elektrischen Anzeige der Ventilposition und Bewegen des Ventilglieds, bis die Summe Null ist zum Regulieren der Temperatur der Abgabeluft vom Wärmetauscher.

14. Verfahren nach Anspruch 13, wobei der Schritt des Vorsehens eines Wärmetauschers den Schritt des Vorsehens separater Wärmetauscher im vorderen Tei (28) und im hinteren Teil (100) des Passagierraums vorsieht; und wobei der Schritt des Vorsehens eines Ventils (24) den Schritt des Vorsehens separater Ventile (24, 106) für jeden Wärmetauscher vorsieht.

15. Verfahren nach Anspruch 13, das weiterhin die folgenden Schritte aufweist:
(a) Vorsehen eines Kaltluftwärmetauschers (82) der stromaufwärts von dem Warmluftwärmetauscher angeordnet ist; und
(b) Zirkulieren einer Kühlmittelströmung in dem Kaltluftwärmetauscher zum Kühlen des Luftstromes, bevor er über den Warmluftwärmetauscher (28) strömt.

16. Verfahren nach Anspruch 13, wobei der Schritt des Blasens eines Luftstroms über den Wärmetauscher den Schritt des Vorsehens eines Gebläses und das selektive Variieren der Geschwindigkeit des Gebläses vorsieht.

17. Verfahren nach Anspruch 13, wobei der Schritt des Vorsehens eines elektrischen Bezugssignals, das eine vom Verwender gewünschte relative Änderung in der Abgabelufttemperatur anzeigt, den Schritt des Vorsehens eines separaten elektrischen Bezugssignals in dem vorderen und dem hinteren Teil eines Fahrzeugpassagierraums vorsieht.

**Revendications**

1. Dispositif pour commander la température de l'air déchargé dans un compartiment passager de véhicule, comportant :
un échangeur de chaleur (28) ayant un écoulement traversant de fluide chauffé, disposé dans une chambre (36) située à l'intérieur d'un boîtier (38);
un ventilateur (42) situé à l'intérieur du boîtier (38), entraîné par un moteur (44) pour fournir un écoulement d'air sur l'échangeur de chaleur (28);
des sorties de décharge (PLANCHER; DEGIVRAGE) situées dans le boitier 38 pour décharger l'écoulement d'air provenant de l'échangeur de chaleur (28) jusque dans ledit compartiment passager à travers une porte (40) de sélection de mode;
un détecteur (58) pour détecter la température de la décharge d'air provenant de l'échangeur de chaleur (28) jusque dans le compartiment passager, ledit détecteur fournissant un signal électrique représentatif de la température détectée;
caractérisé en ce que le dispositif comporte également :
une vanne (24) ayant un élément mobile pour commander l'écoulement dudit fluide vers ledit échangeur de chaleur (28), ledit élément mobile étant déplacé par un servo-actionneur (50) dont la position est indiquée par un signal électrique,
un sélecteur (61) de changement relatif voulu par l'utilisateur de ladite température de décharge d'air à l'intérieur du compartiment passager, ledit sélecteur fournissant un signal de référence électrique représentatif du changement de température relatif voulu par l'utilisateur;
des moyens de totalisation (66) destinés à totaliser ledit signal électrique de capteur, ledit signal électrique de position de vanne et ledit signal de référence électrique de sélecteur; et
des moyens (50) formant servo-actionneur connectés auxdits moyens de totalisation (66) pour actionner le déplacement dudit élément mobile de ladite vanne jusqu'à ce que ladite somme des signaux électriques soit nulle pour réguler la température dudit air déchargé à partir dudit échangeur de chaleur.

2. Dispositif selon la revendication 1, dans lequel un échangeur de chaleur séparé, un ventilateur séparé, des sorties de décharge séparées, un détecteur séparé, une vanne séparée, des moyens de totalisation séparés et des moyens formant servo-actionneur séparé sont prévus dans les compartiments passager avant et arrière du véhicule pour une commande séparée par les passagers avant et arrière de la température de l'air déchargé dans ledit compartiment avant et ledit compartiment arrière pour passagers de véhicule.

EP 0 360 101 B1

**3.** Dispositif selon la revendication 1 ou 2 dans lequel chacun des ventilateurs séparés (42, 109) est associé électriquement à des moyens (78, 118) formant commande respective de vitesse de ventilateur.

**4.** Dispositif selon la revendication 1 ou 2, dans lequel chacun des détecteurs séparés (58, 144) est un détecteur de température du type résistance thermosensible ayant un coefficient de température négatif pour la résistance.

**5.** Dispositif selon la revendication 1 ou 2, dans lequel chacune desdites vannes séparées (24, 106) est une vanne du type dérivation à écoulement continu.

**6.** Dispositif selon la revendication 5, dans lequel chacune desdites vannes séparées (24, 106) est une vanne de dérivation du type papillon donnant un écoulement d'air à peu près complet par l'intermédiaire d'une rotation de 30° de l'élément mobile formant papillon à partir de sa position fermée.

**7.** Dispositif selon la revendication 1 ou 2, dans lequel chacun desdit sélecteurs séparés (61, 135) de température relative voulue par un passager est un potentiomètre (56, 130).

**8.** Dispositif selon la revendication 1, comportant en outre un échangeur de chaleur (42) ayant un écoulement de produit réfrigérant traversant, disposé dans ladite chambre (36) située à l'intérieur dudit boitier (38) en étant adjacent et en amont dudit premier échangeur de chaleur (28).

**9.** Dispositif selon la revendication 1 ou 2, comportant en outre un échangeur de chaleur séparé ayant un écoulement traversant de produit réfrigérant prévu à l'avant (82) et à l'arrière (152) d'un compartiment pour passagers de véhicule, en étant adjacent et en amont de chacun desdits échangeurs de chaleur (28, 100) pour une commande séparée par l'intermédiaire des passagers avant et arrière de la température de l'air déchargée dans le compartiment passager avant et le compartiment passager arrière dudit véhicule.

**10.** Dispositif selon la revendication 9, dans lequel un de chacun desdits échangeurs de chaleur (28, 100) et un de chacun desdits échangeurs de chaleur (82,152) sont formés d'ailettes communes situées dans le compartiment passager avant et dans le compartiment passager arrière dudit véhicule.

**11.** Dispositif selon la revendication 9, comportant en outre une vanne à expansion (84, 154) séparée reliée à chacun desdits échangeurs de chaleur (82, 152) pour commander l'écoulement de produit réfrigérant par chacun desdits échangeurs de chaleur (28, 100).

**12.** Dispositif selon la revendication 1 dans lequel ladite vanne (24, 106) et lesdits moyens (50, 124) formant servo-actionneur sont montés sur ledit boîtier (38,102).

**13.** Procédé de commande de la température de l'air déchargé jusque dans un compartiment passager de véhicule comportant les étapes consistant à :
(a) fournir un échangeur de chaleur (28) et faire écouler du fluide chauffé à travers ce dernier;
(b) souffler un flux d'air sur ledit échangeur de chaleur et diriger la décharge à partir de celui-ci jusque dans le compartiment passager du véhicule,
(c) détecter la température de la décharge d'air à partir de l'échangeur de chaleur jusque dans le compartiment passagers et fournir un signal électrique de température représentatif de la température détectée,
(d) fournir une vanne (24) ayant un élément mobile pour commander l'écoulement de fluide chauffé à travers ledit échangeur de chaleur (28) et fournir une indication électrique de la position dudit élément formant vanne, caractérisé en ce que le procédé comporte également les étapes consistant à :
(e) fournir un signal électrique de référence représentatif d'une modification relative voulue par l'utilisateur de ladite température de décharge d'air, et
(f) totaliser uniquement ledit signal électrique de référence, ledit signal de température et ladite indication électrique de ladite position de vanne et déplacer ledit élément de vanne jusqu'à ce que ladite somme soit zéro pour réguler la température dudit air déchargé à partir dudit échangeur de chaleur.

11

**14.** Procédé selon la revendication 13, dans lequel l'étape consistant à fournir un échangeur de chaleur comporte l'étape consistant à fournir des échangeurs de chaleur séparés dans le compartiment passager avant (28) et le compartiment passager arrière (100); et l'étape consistant à fournir une vanne (24) comporte l'étape consistant à fournir une vanne séparée (24, 106) pour chaque échangeur de chaleur.

**15.** Procédé selon la revendication 13, comportant en outre les étapes consistant à :
(a) fournir un échangeur de chaleur (82) à air froid disposé en amont dudit échangeur de chaleur à air chaud, et
(b) faire circuler un écoulement de produit réfrigérant dans ledit échangeur de chaleur à air froid pour refroidir ledit flux d'air avant qu'il s'écoule sur ledit échangeur de chaleur à air chaud (28).

**16.** Procédé selon la revendication 13, dans lequel ladite étape consistant à souffler un flux d'air sur ledit échangeur de chaleur comporte les étapes consistant à fournir un ventilateur et faire varier de manière sélective la vitesse dudit ventilateur.

**17.** Procédé selon la revendication 13, dans lequel l'étape consistant à fournir un signal électrique de référence représentatif d'un changement relatif voulu par l'utilisateur de ladite température d'air déchargé comporte une étape consistant à fournir un signal électrique de référence séparé pour le compartiment passager avant et pour le compartiment passager arrière d'un véhicule.

Fig. 1

FIG. 2

EP 0 360 101 B1

14

152,82

100,28

FIG. 3

EP 0 360 101 B1